# FASCICULE DE BREVET EUROPEEN

(11) **EP 0 540 435 B1**
(45) Date de publication et mention de la délivrance du brevet: **20.09.1995**
(21) Numéro de dépôt: 92420383.9
(22) Date de dépôt: 27.10.1992
(51) Int. Cl.: F24C 7/04, F24C 7/06

(54) **Appareil à émission infrarouge pour la cuisson d'aliments en forme de galette**
Vorrichtung zur Infrarotemission zum Garen von Speisen in Form von Blechkuchen
Infrarouge emission device for cooking food in the shape of a flat cake

(30) Priorité: 30.10.1991 FR 9113763
(43) Date de publication de la demande: 05.05.1993
(73) Titulaire: Jovanovic, Dragomir, F-38000 Pont-de-Claix Isère (FR)
(72) Inventeur: Jovanovic, Dragomir, F-38000 Pont-de-Claix Isère (FR)
(74) Mandataire: Perrier, Jean-Pierre

(56) Documents cités:
- EP-A- 0 226 407
- EP-A- 0 236 269

## Description

L'invention est relative à un appareil de cuisson à émission infrarouge pour la cuisson d'aliments en forme de galette tels que pizzas, quiches, tartes, galettes, génoises, assortiments feuilletés, fougasses.

Actuellement, la cuisson de tels aliments est assurée dans des fours traditionnels, à gaz, à rayonnements infrarouges, avec ou sans rotation de l'air chaud, ou dans des fours spécialisés comportant des moyens de chauffage de type brûleurs ou résistances électriques et des moyens d'accumulation des calories, et notamment des matériaux réfractaires.

La plupart de ces fours nécessitent, avant toute cuisson et pour amener à bonne température la masse des matériaux réfractaires, une phase de préchauffage dont la durée intervient sur le temps total de la cuisson, mais aussi sur la consommation d'énergie. Par ailleurs, les fours fonctionnant à l'électricité exigent une puissance installée élevée qui intervient de manière sensible sur le coût de l'investissement et sur le coût du fonctionnement.

Les fours actuels ont un encombrement important, soit parce qu'ils sont polyvalents et doivent pouvoir accueillir des plats volumineux ou des mets gonflants à la cuisson, soit parce que, pour accumuler l'énergie calorifique, ils possèdent un volume important de matériaux réfractaires et/ou de matériaux isolants.

Dans les fours comportant deux sources de rayonnements infrarouges, respectivement supérieure et inférieure, disposées de part et d'autre d'un plateau logé dans une chambre de cuisson, les sources de rayonnements infrarouges sont constituées par des résistances blindées qui, en forme d'épingle à cheveux, avec ou sans sinusoïde centrale, sont disposées à proximité de la sole et de la voûte et par exemple dans des parties en forme de gouttière réfléchissante comme dans EP-A 236 269. Le plateau, recevant le plat dont il faut assurer la cuisson, coopère avec des consoles saillant des parois latérales et permettant d'ajuster le niveau vertical du plateau en fonction des besoins de la cuisson.

Avec cette structure, et lors de la cuisson d'aliments de faible l'auteur, tels que des galettes, la distance entre la face supérieure de l'aliment et la résistance de voûte, est de l'ordre de 10 à 20 cm. Cela a pour conséquences d'augmenter les déperditions calorifiques par dissipation de l'énergie dans l'air et d'utiliser dans de mauvaises conditions le rayonnement infrarouge, puisque la puissance calorifique de celui-ci est d'autant plus grande qu'il est proche du mets. Il en résulte que, à puissance électrique constante, l'apport calorifique utile à la cuisson est réduit et que pour obtenir la cuisson recherchée il faut augmenter la durée et consommer davantage d'électricité.

La présente invention a pour but de remédier à ces inconvénients en fournissant un appareil qui, spécialisé pour la cuisson des aliments de faible épaisseur, en forme de galette, soit peu encombrant, ne nécessite aucun préchauffage avant cuisson et permette d'obtenir une cuisson homogène et rapide avec une faible puissance installée et une faible consommation électrique.

Dans cet appareil, les deux sources sont séparées par un espace compris entre 5 et 10 centimètres et celle inférieure est disposée à moins d'un millimètre du fond du moyen support, constitué par un plateau circulaire et amovible qui, supporté et guidé en rotation par rapport à la sole par des moyens de maintien et de guidage en rotation, est en matériau perméable aux infrarouges et coopère, par sa périphérie, avec des moyens d'entraînement positif en rotation à vitesse constante, moyens donnant un caractère séquentiel à la violente énergie radiative des sources infrarouges.

Avec cet agencement, le mets disposé dans l'espace de cuisson est soumis, par les deux sources infrarouges, à une action radiative dont la violence, pouvant normalement le brûler ou le calciner au moins en surface, est compensée par la rotation du plateau. A cette action radiative séquentielle s'ajoute une cuisson continue à la vapeur, résultant de l'absorption par le mets de la chaleur latente de la vapeur se condensant sur lui, vapeur provenant de l'évaporation sous l'action radiative, d'abord de l'eau contenue dans le mets, puis de l'évaporation des gouttelettes de l'eau résultant de la condensation de la vapeur sur le mets, par transfert à ce mets de la chaleur latente de la vapeur. Ce cycle d'évaporation-condensation s'effectue d'autant plus aisément que la source supérieure est proche de la face supérieure du mets et fournit une puissance surfacique élevée et qu'est réduit l'espace ménagé entre la face supérieure du mets et la voûte de l'espace de cuisson.

Grâce à cela et à la suppression de tout préchauffage de l'appareil, le temps de cuisson du mets est divisé par trois et la consommation électrique est divisée par quatre.

Dans une forme d'exécution de l'invention, chacune des sources infrarouges est aménagée pour fournir un rayonnement infrarouge allant en croissant depuis le milieu de sa longueur, correspondant au centre du plateau, jusqu'à chacune de ses extrémités dépassant de ce plateau.

Cette variation du rayonnement, combinée avec la rotation du plateau, permet d'obtenir un apport calorifique régulier sur toute la surface du mets, c'est à dire aussi bien au centre de celui-ci, tournant à faible vitesse, qu'à sa périphérie, tournant avec une plus grande vitesse circonférentielle.

Avantageusement, et pour améliorer encore l'homogénéité de la cuisson et empêcher une surcuisson dans la partie centrale du mets, les sources supérieure et inférieure de rayonnements infrarouges sont décalées transversalement de part et d'autre d'un plan médian vertical passant par le diamètre du plateau avec lequel leurs axes longitudinaux respectifs sont parallèles:

D'autres caractéristiques et avantages ressortiront de la description qui suit en référence au dessin schématique annexé représentant, à titre d'exemples non limitatifs, deux formes d'exécution de cet appareil de cuisson.
Figure 1 en est une vue en perspective avec coupe partielle montrant la position relative des différents composants, d'une première forme d'exécution,
Figure 2 en est une vue en coupe suivant II-II de figure 1,
Figure 3 est une vue partielle en coupe suivant III-III de figure 2 montrant à échelle agrandie les moyens de maintien et de guidage en hauteur du plateau,
Figure 4 est une vue partielle en coupe suivant IV-IV de figure 1, montrant à échelle agrandie, une forme d'exécution des moyens d'entraînement de ce plateau,
Figure 5 est une vue de côté en coupe longitudinale montrant à échelle agrandie une forme d'exécution de la source infrarouge,
Figure 6 est une vue partielle en perspective d'une forme d'exécution des moyens de sécurité interrompant l'alimentation des sources infrarouges,
Figure 7 est une vue similaire à la figure 2 mais montrant une forme d'exécution de cet appareil dans le cas de son application à la cuisson de crêpes.

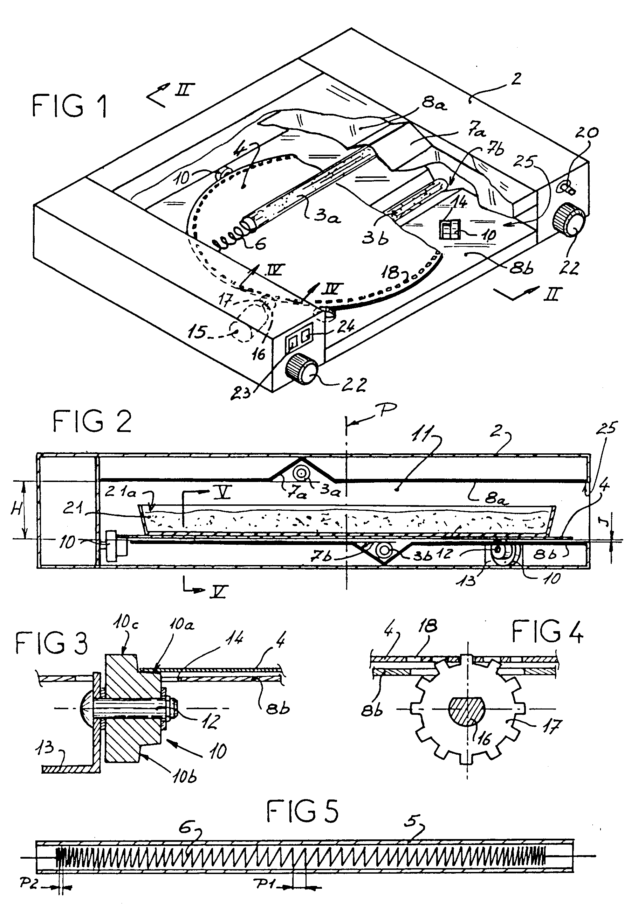

Comme montré aux figures 1 et 2, l'appareil de cuisson est composé d'un boîtier métallique 2 formant châssis et supportant deux sources infrarouges 3a-3b délimitant un espace de cuisson 11 et disposées de part et d'autre d'un plateau 4, amovible, circulaire et rotatif. Le plateau 4 est réalisé en matériau perméable aux infrarouges et en particulier en vitrocéramique.

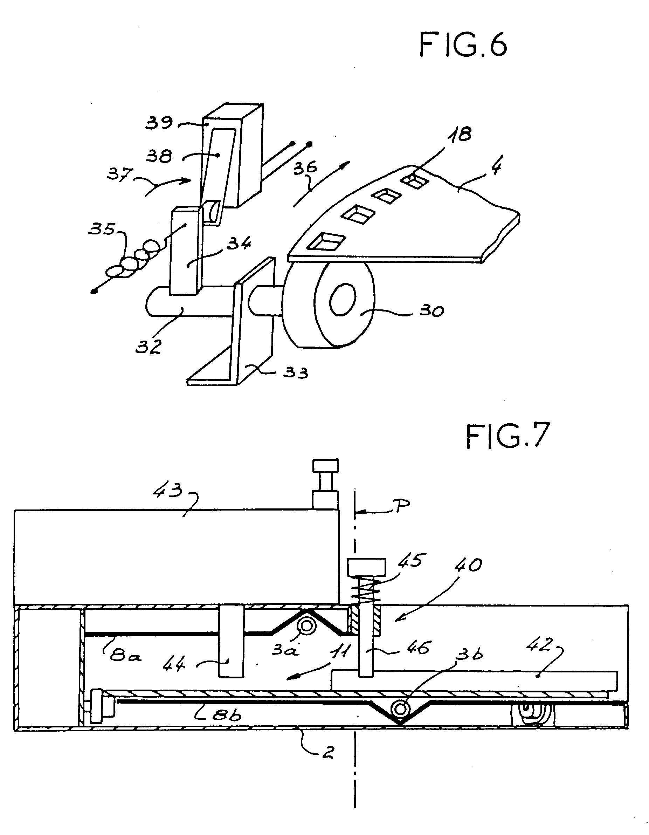

Chacune des sources infrarouges 3a-3b est constituée, comme montré plus en détails à la figure 5, par un tube cylindrique 5 en quartz contenant une résistance électrique spiralée 6. Cette figure met en évidence que le pas des spires de la résistance 6 va en décroissant depuis la moitié de sa longueur jusqu'à ses extrémités, d'une valeur P1 à une valeur P2, de manière à fournir une énergie ponctuelle de valeur allant en croissant du milieu de cette résistance jusqu'à chacune de ses extrémités.

Dans une variante de réalisation, non représentée, chaque résistance est formée de tronçons présentant chacun un pas de spire constant et les différents tronçons ont des pas qui vont en décroissant depuis le tronçon du milieu vers ceux de l'extérieur.

Les figures 1 et 2 montrent que les deux résistances, dont les extrémités débordent du plateau 4, sont disposées de part et d'autre de ce plateau 4, parallèlement à un diamètre de celui-ci et de part et d'autre d'un plan vertical P passant par ce diamètre. Ainsi, lors de la rotation de ce plateau, chaque zone ponctuelle du mets posé sur lui est soumise, à des intervalles de temps réguliers, donc de façon séquentielle, à la puissance calorifique des résistances.

La figure 2 montre que chacune des deux résistances 3a-3b est disposée dans une gouttière réflectrice 7a-7b, ayant une section générale en "V" avec sa concavité tournée vers la gouttière opposée. Ces gouttières sont ménagées dans des parois métalliques constituant respectivement la voûte 8a et la sole 8b de l'appareil.

Le plateau 4 est maintenu à proximité immédiate de la résistance inférieure 3b, dont il est séparé par une distance J comprise entre 0,5 et 1 millimètre, par des moyens qui, dans la forme d'exécution représentée, sont constitués par des galets épaulés 10, au nombre de trois et répartis à 120°.

Comme le montre plus en détails la figure 3, chacun des galets est monté libre en rotation sur un pivot 12, dont l'axe longitudinal est sensiblement radial par rapport au plateau. Ce pivot est porté par un palier 13 lié à la partie inférieure du châssis 2. La partie supérieure de chaque galet passe à travers une ouverture 14 de la sole 8b. La partie de petit diamètre 10a de chaque galet 10 dépasse de la sole 8b d'une valeur déterminant l'espace entre le fond du plateau 4 et cette sole 8b, et constitue point d'appui pour le bord périphérique de ce plateau 4. L'épaulement 10c est disposée à l'extérieur par rapport au centre du plateau et de manière que sa face diamétrale 10b de l'épaulement 10c du galet constitue face de butée en s'opposant à tout mouvement de translation du plateau 4.

On conçoit aisément que lorsque le plateau est entrainé en rotation, les galets assurent parfaitement le soutien et le guidage en rotation de ce plateau, sans pour autant s'opposer à son extraction, par exemple pour procéder à son nettoyage.

Suivant une caractéristique de l'invention, la résistance 3a est également disposée à proximité, mais sans contact, de la face supérieure 21a du mets 21, dont elle est séparée, avant cuisson, par une distance comprise entre 0,5 et 5 centimètres selon la nature du mets. De ce fait, pour accueillir des mets en forme de galette ayant, avant cuisson, une hauteur maximale de l'ordre de 4 à 5 centimètres, l'espace de cuisson 11 délimité entre les résistances supérieure 3a et inférieure 3b, a une hauteur H comprise entre 5 et 10 centimètres selon la puissance nominale de ces résistances, et en pratique est de l'ordre de 6 centimètres. Cette distance, très faible par rapport à celle des fours actuels, permet d'assurer la cuisson de tous les aliments se présentant sous forme de galettes, et de bénéficier au mieux de l'énergie calorifique générée par les résistances 3a-3b.

Le mouvement de rotation du plateau est, dans cette forme d'exécution, engendré par un moteur électrique 15 sur l'arbre de sortie 16 duquel est calée en rotation une roue dentée 17. Bien entendu, le moteur est disposé entre deux galets 10 et de manière que l'axe longitudinal de son arbre de sortie 16 soit sensiblement radial par rapport au centre de rotation du plateau 4. La roue dentée 17 s'engrène avec une denture 18 ménagée à la périphérie du plateau 4 et composée, soit par une denture rapportée sous la face inférieure de ce plateau, soit par une denture découpée dans ce plateau.

Dans une variante de réalisation, non représentée, la denture est réalisée dans ou rapportée sous une couronne métallique intercalée entre le plateau 4 en vitrocéramique et les galets 10.

Le circuit électrique d'alimentation du moteur 15 et des résistances 3a-3b comprend, d'une part, une minuterie 20 permettant de régler les temps de cuisson, d'autre part, des moyens de réglage 22, de type rhéostat ou autre, permettant de régler la puissance calorifique dissipée par chacune des résistances, et, bien entendu, un bouton marche-arrêt 23 avec voyant de fonctionnement 24. De préférence, ce circuit comprend également des moyens de sécurité coupant l'alimentation des résistances 3a-3b en cas de défaillance ou d'arrêt du moteur électrique, afin d'éviter que la puissance calorifique des deux résistances brûle localement le mets en cours de cuisson.

Dans la forme d'exécution représentée à la figure 6, ces moyens de sécurité sont constitués par un frotteur 30 qui, en matériau synthétique à faible coefficient de frottement, est maintenu en contact de glissement avec le bord périphérique inférieur du plateau 4, et est solidaire d'un axe radial 32 monté pivotant dans un palier fixe 33. A son autre extrémité, l'axe 32 est solidaire d'un levier 34 rappelé en position de repos par un ressort 35.

Lorsque le plateau pivote dans le sens de la flèche 36, son glissement sur le frotteur 30 tend à faire pivoter le levier 34, dans le sens de la flèche 37, jusqu'à ce qu'il appuie sur la languette 38 d'un contacteur 39 disposé sur le circuit électrique d'alimentation des résistances 3a-3b. Dès que le plateau n'est plus entraîné en rotation, et quelle que soit la cause de cet arrêt, le ressort 35 rappelle le levier d'autant plus aisément que le frotteur 30 n'est soumis qu'à un faible effort résistant. Il en résulte que la languette 38 du contacteur est libérée et provoque l'actionnement de ce contacteur dans le sens de l'arrêt de l'alimentation des résistances 3a-3b.

Ce dispositif simple, peu onéreux et fiable, évite également la détérioration de l'appareil et notamment des gouttières réflectrices 7a-7b par les fumées de carbonisation du mets 21, en cas d'arrêt intempestif de la rotation.

L'ouverture 25 ménagée sur la face avant du four pour permettre l'introduction et l'extraction des mets peut être obturée par une porte, bien que cela ne soit pas indispensable compte tenu de la disposition transversale des résistances et de l'utilisation de leur rayonnement à proximité immédiate de leur émission, c'est à dire dans des conditions réduisant les déperditions latérales. De même, la présence d'une ouverture 25 ne favorise pas l'échappement de la vapeur créée dans la chambre de cuisson 11, puisque cette vapeur a tendance à condenser sur le mets tant que la température de celui-ci est inférieure à la sienne.

On conçoit aisément que tous les mets en forme de galettes ou présentant une faible hauteur peuvent très aisément et rapidement être cuits dans cet appareil par les deux résistances 3a-3b disposées à proximité immédiate de la masse à cuire et dont la violence du rayonnement infrarouge est compensée par la rotation du plateau. Grâce au pas variable donné à chacune des résistances, le rayonnement de chacune d'elles est adapté localement à la vitesse circonférencielle de la zone en vis à vis du plateau, ce qui permet d'obtenir une cuisson régulière dans toute la masse du mets.

Grâce à cette structure, et à l'absence de masses accumulant l'énergie, telles que les matériaux réfractaires, la puissance électrique installée par rapport à un four électrique traditionnel et divisé par trois, tandis que la consommation est divisée par quatre. Ce dernier gain résulte également de l'absence de préchauffage et de l'instantanéité de l'émission infrarouge, dès que chaque résistance est alimentée.

Les figures 1 et 2 montrent que, par rapport à un four traditionnel, l'appareil selon l'invention met en oeuvre beaucoup moins de moyens et est donc peu onéreux, et surtout est peu encombrant, ce qui permet de l'intégrer facilement dans un élément de mobilier de cuisine.

Il faut ici préciser qu'en respectant les normes actuellement en vigueur pour le mobilier de cuisine, il est possible de réaliser un appareil de cuisson pouvant accepter des plats à tarte ou des pizzas jusqu'à un diamètre de 35 cm, et possédant lui-même, en encombrement général, une largeur de 50 cm, pour une hauteur de 10 cm et une profondeur de 45 cm. Avec deux résistances 3a-3b de 500 watts chacune, cet appareil permet de cuire une tarte en 15 minutes et une pizza en 10 minutes.

Aux avantages exposés ci-dessus, il faut ajouter une facilité d'entretien conduisant à une parfaite hygiène de cuisson, et la possibilité de superposer plusieurs appareils identiques dans une installation à usage professionnel.

L'appareil qui a été décrit ci-dessus dans le cas de son application à la cuisson d'aliments en forme de galette, peut bien entendu être utilisé pour la décongélation ou le réchauffage de tous mets présentant une faible épaisseur et en tous cas inférieure à la hauteur de la chambre de cuisson de cet appareil.

La forme d'exécution représentée figure 7 représente d'ailleurs la structure générale d'un appareil spécialisé pour la cuisson de crêpes. Celui-ci se différencie de celui décrit dans la forme d'exécution précédente par le fait que la voûte 8a et la partie supérieure du châssis 2 comportent une découpe antérieure 40 d'accès au plateau 4, découpe s'étendant sensiblement jusqu'à mi-profondeur de la chambre de cuisson 11. Cette découpe est d'autant plus aisée à réaliser que les deux résistances 3a-3b sont disposées transversalement et que celle supérieure 3a est la plus décalée vers l'arrière.

A cette figure, la référence 42 désigne une raclette s'étendant du centre à la périphérie du plateau 4 et permettant de répartir sur ce plateau une quantité de pâte délivrée par un distributeur-doseur 43 au moyen d'une canule 44 débouchant sur le plateau.

Après déversement d'une quantité dosée de pâte sur le plateau 4 et répartition de celle-ci par la raclette 42, le ressort 45 associé à la tige 46 portant la raclette permet le rappel vers le haut de celle-ci et évite ainsi tout frottement, gènant la rotation du plateau. Lorsque la crêpe est cuite, ce qu'il est très facile de constater en l'examinant à travers la découpe 40 du châssis, l'opérateur glisse, entre la crêpe et le plateau, une spatule et utilise le mouvement de rotation du plateau pour décoller la crêpe de ce plateau.

Dans cette application particulière, la hauteur de la chambre de cuisson 11 peut encore être réduite pour utiliser au mieux l'énergie radiative, ce qui permet, pour une puissance surfacique égale, d'utiliser des résistances 3a et 3b de plus faible puissance, moins onéreuse et consommant moins.

Dans une forme d'exécution non représentée, l'ensemble, sole 8b avec la source infrarouge inférieure 3b, le plateau 4 et ses moyens de guidage 10, d'entraînement 15-16-17 et de sécurité 30-38-39, est disposé dans un châssis pouvant coulisser dans l'appareil à la façon d'un tiroir pour faciliter le nettoyage et l'entretien de ces éléments, mais aussi, pour faciliter la mise en place de l'aliment sur le plateau et son extraction après cuisson.

Il est évident que l'invention s'étend également aux appareils comportant des moyens équivalents tels que des moyens de guidage du plateau constitués par des portées étagées et fixes en matériau réfractaire glissant ou des moyens d'entraînement en rotation par galets frotteurs.

## Revendications

1. Appareil électrique de cuisson pour la cuisson d'aliments en forme de galette, du type mettant en oeuvre deux sources rectilignes de rayonnements infrarouges, respectivement, supérieure (3a) et inférieure (3b), disposées dans des gouttières réflectrices ménagées respectivement dans la voûte et la sole d'un espace de cuisson et de part et d'autre d'un moyen support pour l'aliment dont il faut assurer la cuisson, **caractérisé en ce que** les deux sources (3a-3b) sont séparées par un espace compris entre 5 et 10 centimètres et celle inférieure (3b) est disposée à moins d'un millimètre du fond du moyen support, constitué par un plateau (4) circulaire et amovible qui, supporté et guidé en rotation par rapport à la sole par des moyens de maintien et de guidage en rotation, est en matériau perméable aux infrarouges et coopère, par sa périphérie, avec des moyens (15-16-17-18) d'entraînement positif en rotation à vitesse constante, moyens donnant un caractère séquentiel à la violente énergie radiative des sources infrarouges.

2. Appreil selon la revendication 1, **caractérisé en ce que** les sources (3a) supérieure et inférieure (3b) de rayonnements infrarouges sont décalées de part et d'autre du plan vertical médian P passant par le diamètre du plateau avec lequel leurs axes longitudinaux respectifs sont parallèles.

3. Appareil selon l'une quelconque des revendications 1 et 2, **caractérisé en ce que** chacune des sources infrarouges (3a-3b) est aménagée pour fournir un rayonnement infrarouge allant en croissant depuis le milieu de sa longueur, correspondant au centre du plateau (4) jusqu'à chacune de ses extrémités dépassant de ce plateau.

4. Appareil selon la revendication 3, **caractérisé en ce que** lorsque chacune des sources infrarouges (3a-3b) est constituée par un tube cylindrique en quartz (5) contenant une résistance électrique spiralée (6), le pas de la spirale va en décroissant depuis le milieu de sa longueur jusqu'à chacune de ses extrémités.

5. Appareil selon la revendication 3, **caractérisé en ce que** lorsque chacune des sources infrarouges (3a-3b) est constituée par un tube cylindrique en quartz (5) contenant un résistance électrique spiralée, celle est formée par une succession de tronçons se différenciant par leurs pas d'enroulement et les différents tronçons ont des pas allant en décroissant depuis le tronçon du milieu de cette résistance vers ceux de l'extérieur.

6. Appareil selon l'une quelconque des revendications 1 à 5, **caractérisé en ce que** les moyens de maintien et de guidage en rotation du plateau circulaire amovible (4) sont constitués par des galets épaulés (10) montés libres en rotation autour d'axes (12), horizontaux et radiaux par rapport au plateau (4), espacés angulairement et portés par des paliers fixes (13), chaque galet (10) étant disposé de manière que sa partie (10a) supportant le fond du plateau (4) soit au-dessus mais à faible distance de la sole (8b) et que son épaulement (10c) soit à l'extérieur et constitue, par sa face diamétrale (10b), butée de calage du bord périphérique du plateau (4).

7. Appareil selon l'une quelconque des revendications 1 à 6, **caractérisé en ce que** les moyens d'entraînement du plateau comprennent, en complément d'un moteur électrique (15) dont l'arbre de sortie (16) est disposé radialement au plateau et au-dessous de lui, et, calé sur cet arbre, une roue dentée (17) coopérant avec une denture circulaire (18) solidaire de la périphérie du plateau (4).

8. Appareil selon la revendication 7, **caractérisé en ce que** le circuit électrique d'alimentation du moteur (15) et des sources (3a-3b) de rayonnement infrarouge comprend une minuterie (20), des moyens (22) de réglage de la puissance de chacune des deux sources (3a-3b) et des moyens de sécurité coupant l'alimentation de sources (3a-3b) en cas de défaillance du moteur électrique (15).

9. Appareil selon la revendication 8, **caractérisé en ce que** les moyens de sécurité sont constitués par un frotteur (30) en contact avec la face inférieure du plateau (4) et solidaire d'un levier oscillant (34), qui rappelé en position de repos par un ressort de rappel (35), est apte, lors de la rotation du plateau (4), à venir en appui sur la languette de commande (38) d'un contacteur de coupure (39) monté sur le circuit d'alimentation des résistances (3a-3b).

10. Appareil selon l'une quelconque des revendications 1 à 9, **caractérisé en ce que**, dans le cas de son application à la cuisson de crêpes, les sources de rayonnements infrarouges (3a-3b) sont disposées de manière que leurs axes longitudinaux soient transversaux et que la source supérieure (3a) soit la plus en arrière, tandis que la voûte (8a) et la partie supérieure du châssis (2) comportent une découpe antérieure (40) d'accès au plateau (4), découpe s'étendant sensiblement jusqu'à mi-profondeur de la chambre de cuisson (11).

11. Appareil selon l'une quelconque des revendications 8 à 10, **caractérisé en ce qu**e la sole (8b) avec la source infrarouge inférieure (3b), le plateau (4) et ses moyens de guidage (10), d'entraînement ((15-16-17) et de sécurité (30-38-39), sont disposés sur un châssis formant tiroir par rapport à l'appareil.

## Claims

1. Electrical cooking apparatus for cooking food in the form of cakes, of the type employing two rectilinear sources of infrared radiation, respectively upper (3a) and lower (3b), disposed in reflective channels formed respectively in the roof and the floor of a cooking space and at either side of a support means for the fond to be cooked, characterised in that the two sources (3a-3b) are separated by a space of between 5 and 10 centimetres and the lower one (3b) is disposed within a millimetre from the bottom of the support means constituted by a circular removable plate (4) which, being supported and guided for rotation with respect to the floor by means for retention and rotational guiding, is of an infrared permeable material and cooperates, at its periphery, with means (15, 16, 17, 18) for positive rotational driving at constant speed, the means giving a sequential character to the vigorous radiant energy of the infrared sources.

2. Apparatus according to Claim 1, characterized in that the upper and lower infrared radiation sources (3a and 3b) are offset to either side of the vertical median plane P passing through the diameter of the plate with which their respective longitudinal axes are parallel.

3. Apparatus according to either of Claims 1 and 2, characterised in that each of the infrared sources (3a, 3b) is arranged to provide infrared radiation increasing from the middle region of its length, corresponding to the centre of the plate (4), as far as each of its ends extending beyond this plate.

4. Apparatus according to Claim 3, characterised in that when each of the infrared sources (3a, 3b) is constituted by a cylindrical tube of quartz (5) containing a spirally wound electrical resistance (6), the pitch of the spiral decreases from the middle region of its length to each of its ends.

5. Apparatus according to Claim 3, characterized in that when each of the infrared sources (3a, 3b) is constituted by a cylindrical tube of quartz (5) containing a spirally wound electrical resistance, this is formed by a succession of portions distinguished from each other by the pitch of their windings and the different portions have pitches decreasing from the middle portion of this resistance towards those at the exterior.

6. Apparatus according to any one of Claims 1 to 5, characterised in that the means for retaining and rotational guiding of the removable circular plate (4) are constituted by shouldered rollers (10) freely rotatably mounted about shafts (12) which are horizontal and radial with respect to the plate (4), angularly spaced and carried by fixed supports (13), each roller (10) being disposed in such a manner that its portion (10a) supporting the bottom of the plate (4) is above but at a small distance from the floor (8b) and that its shoulder (10c) is at the exterior and constitutes, by its diametral face (10b) a retaining abutment for the peripheral edge of the plate (4).

7. Apparatus according to any one of Claims 1 to 6, characterised in that the driving means for the plate comprises, in combination an electric motor (15) of which the output shaft (16) is disposed radially of the plate and below it and, keyed on this shaft, a toothed wheel (17) cooperating with a circular toothed formation (18) rigid with the periphery of the plate (4).

8. Apparatus according to Claim 7, characterized in that the electrical supply circuit for the motor (15) and the infrared radiation sources (3a, 3b) comprises a timing unit (20), means (22) for adjusting the power of each of the sources (3a, 3b) and safety means which interrupts the supply to the sources (3a, 3b) in the event of malfunction of the electric motor (15).

9. Apparatus according to Claim 8, characterized in that the safety means are constituted by a rubbing device (30) in contact with the lower face of the plate (4) and connected to an oscillating lever (34) which is urged into a rest position by a return spring (35) and adapted during rotation of the plate (4), to come into engagement with the control tongue (38) of a contact breaker (39) mounted in the supply circuit of the resistances (3a, 3b).

10. Apparatus according to any one of Claims 1 to 9, characterised in that, in the case of its application to the cooking of pancakes, the sources of infrared radiation (3a, 3b) are disposed in such a manner that their longitudinal axes are transverse and that the upper source (3a) is the rearmost, whilst the roof (8a) and the upper part of the frame (2) include a rear cut away (40) for access to the plate (4), the cut away extending substantially as far as the mid-depth of the cooking chamber (11).

11. Apparatus according to any one of Claims 8 to 10, characterised in that the floor (8b) with the lower infrared source (3b), the plate (4) and its means for guiding (10), driving (15, 16, 17) and safety (30, 38, 39), are disposed on a frame forming a drawer of the apparatus.

## Patentansprüche

1. Elektrische Garungsvorrichtung für das Garen von blechkuchenförmigen Nahrungsmitteln, welche dem Typ angehört, der zwei geradlinige Infrarotstrahlungsquellen, eine obere (3a) bzw. eine untere (3b), verwendet, die in reflektierenden Mulden angeordnet sind, die in der Decke bzw. der Basis eines Garungsraums und beiderseits eines Trägermittels für das Nahrungsmittel ausgebildet sind, dessen Garung sicherzustellen ist, **dadurch gekennzeichnet**, **daß** die beiden Quellen (3a,3b) durch einen zwischen 5 und 10 Zentimeter betragenden Abstand getrennt sind und die untere (3b) weniger als einen Millimeter von dem Boden des Trägermittels angeordnet ist, welches von einer kreisförmigen und entnehmbaren Platte (4) gebildet ist, die, relativ zu der Basis von Halte- und Drehführungsmitteln getragen und drehgeführt, aus infrarotdurchlässigem Material ist und über ihren Rand mit Mitteln (15, 16, 17, 18) zum sicheren Antreiben zur Drehung mit konstanter Geschwindigkeit zusammenwirkt, welche Mittel der starken Strahlungsenergie der Infrarotquellen einen sequentiellen Charakter geben.

2. Vorrichtung nach Anspruch 1, **dadurch gekennzeichnet**, **daß** die obere Infrarotstrahlungsquelle (3a) und die untere Infrarotstrahlungsquelle (3b) beiderseits zur Vertikalmittelebene P versetzt sind, welche durch den Durchmesser der Platte verläuft, zu welchem ihre jeweiligen Längsachsen parallel sind.

3. Vorrichtung nach einem der Ansprüche 1 und 2, **dadurch gekennzeichnet**, **daß** jede der Infrarotquellen (3a,3b) dazu eingerichtet ist, eine von ihrer dem Zentrum der Platte (4) entsprechenden Längsmitte bis zu jedem ihrer über die Platte hinausgehenden Enden eine zunehmende Infrarotstrahlung zu liefern.

4. Vorrichtung nach Anspruch 3, **dadurch gekennzeichnet**, **daß** dann, wenn jede der Infrarotquellen (3a,3b) von einer einen spiraligen elektrischen Widerstand (6) enthaltenden, zylindrischen Quarzröhre (5) gebildet ist, die Ganghöhe der Spirale von ihrer Längsmitte bis zu jedem ihrer Enden hin abnimmt.

5. Vorrichtung nach Anspruch 3, **dadurch gekennzeichnet**, **daß** dann, wenn jede der Infrarotquellen (3a,3b) von einer einen spiraligen elektrischen Widerstand enthaltenden, zylindrischen Quarzröhre (5) gebildet ist, der Widerstand von einer Aufeinanderfolge sich durch ihre Wicklungsschritte unterscheidender Teilstücke gebildet ist und die Wicklungsschritte der unterschiedlichen Teilstücke von dem mittleren Teilstück des Widerstands zu den äußeren hin abnehmen.

6. Vorrichtung nach einem der Ansprüche 1 bis 5, **dadurch gekennzeichnet**, **daß** die Halte- und Drehführungsmittel der kreisförmigen, entnehmbaren Platte (4) von Rollen (10) mit Absatz gebildet sind, welche um relativ zur Platte (4) horizontale und radiale Achsen (12) frei drehbar angebracht, mit Winkelabstand angeordnet und von festen Lagern (13) getragen sind, wobei jede Rolle (10) derart angeordnet ist, daß ihr den Boden der Platte (4) tragender Bereich (10a) oberhalb, jedoch in geringer Entfernung von der Basis (8b) ist und daß ihr Absatz (10c) außen ist und durch seine Durchmesserseite (10b) einen Positionierungsanschlag für den Umfangsrand der Platte (4) bildet.

7. Vorrichtung nach einem der Ansprüche 1 bis 6, **dadurch gekennzeichnet**, **daß** die Mittel zum Antreiben der Platte zusätzlich zu einem Elektromotor (15), dessen Ausgangswelle (16) radial zur Platte und unterhalb dieser angeordnet ist, ein auf dieser Welle festgelegtes Zahnrad (17) umfassen, welches mit einer kreisartigen Verzahnung (18) am Umfang der Platte (4) zusammenwirkt.

8. Vorrichtung nach Anspruch 7, **dadurch gekennzeichnet**, **daß** die elektrische Versorgungsschaltung des Motors (15) und der Infrarotstrahlungsquellen (3a,3b) einen Zeitschalter (20), Mittel (22) zum Steuern der Leistung jeder der beiden Quellen (3a,3b) und Sicherheitsmittel umfaßt, welche die Versorgung der Quellen (3a,3b) im Falle eines Defekts des Elektromotors (15) unterbrechen.

9. Vorrichtung nach Anspruch 8, **dadurch gekennzeichnet**, **daß** die Sicherheitsmittel von einem die Unterseite der Platte (4) berührenden Reibungselement (30) gebildet sind, welches mit einem Kipphebel (34) verbunden ist, der, von einer Rückstellfeder (35) in Ruhestellung rückgestellt, während der Drehung der Platte (4) mit der Steuerzunge (38) eines Unterbrechungsschalters (39) in Kontakt kommen kann, welcher auf der Versorgungsschaltung der Widerstände (3a,3b) angebracht ist.

10. Vorrichtung nach einem der Ansprüche 1 bis 9, **dadurch gekennzeichnet**, **daß** im Falle ihrer Anwendung beim Ausbacken von Pfannkuchen bzw. Crêpes die Infrarotstrahlungsquellen (3a,3b) derart angeordnet sind, daß ihre Längsachsen quer verlaufen und daß die obere Quelle (3a) am weitesten zurückversetzt ist, während die Decke (8a) und der obere Bereich des Rahmens (2) einen vorderen Ausschnitt (40) für den Zugang zur Platte (4) umfassen, wobei sich der Ausschnitt im wesentlichen bis zur mittleren Tiefe der Garungskammer (11) erstreckt.

11. Vorrichtung nach einem der Ansprüche 8 bis 10, **dadurch gekennzeichnet**, **daß** die Basis (8b) mit der Infrarotstrahlungsquelle (3b), die Platte (4) und ihre Führungsmittel (10), Antriebsmittel (15,16,17) und Sicherheitsmittel (30,38,39) auf einem Rahmen angeordnet sind, welcher relativ zur Vorrichtung ein Schubfachelement bildet.
